# EUROPEAN PATENT SPECIFICATION

(11) **EP 3 129 214 B1**
(45) Date of publication and mention of the grant of the patent: **22.02.2023**
(21) Application number: 15746201.1
(22) Date of filing: 14.01.2015
(51) Int. Cl.: B30B 9/12, B29B 17/00, B30B 9/30, B30B 11/10, B30B 15/34

(54) **METHOD FOR COMPACTING THERMOPLASTIC MATERIALS INTENDED FOR RECYCLING, COMPACTOR APPARATUS AND RELATED ASSEMBLY**
VERFAHREN ZUM VERDICHTEN VON THERMOPLASTISCHEN MATERIALIEN ZUR WIEDERVERWERTUNG, VERDICHTERVORRICHTUNG UND ZUGEHÖRIGE ANORDNUNG
PROCÉDÉ DE COMPACTAGE DE MATÉRIAUX THERMOPLASTIQUES DESTINÉS AU RECYCLAGE, APPAREIL DE COMPACTAGE ET ASSEMBLAGE ASSOCIÉ

(30) Priority: 04.02.2014 FI 20140029
(43) Date of publication of application: 15.02.2017
(73) Proprietor: Eps International OY, 01380 Vantaa (FI)
(72) Inventor: PELTOLA, Jukka Antero, FI-00540 Helsinki (FI)
(74) Representative: Heinonen & Co
(86) International application number: PCT/FI2015/050017
(87) International publication number: WO 2015/118219

(56) References cited:
- WO-A2-2012/035308
- JP-A- H0 963 877
- JP-A- 2007 118 085
- JP-A- 2008 114 273
- NL-C2- 1 002 391
- US-A- 1 348 669
- US-A- 4 371 328
- US-A- 5 489 200
- US-A- 6 132 655
- US-A1- 2011 110 810

## Description

### FIELD OF THE INVENTION

The invention relates to methods and equipment for compacting thermoplastic waste, in particular, expanded polystyrene intended for recycling.

### BACKGROUND

Widespread use of plastics in manufacturing of containers and packaging for consumer products had led to a dramatic increase in amount of plastic waste. Only in EU nearly 50% of plastic waste is still landfilled, said value being even greater when considered worldwide. Recycling of said plastic waste and especially high-bulk and non-bumable expanded polystyrene (EPS) is challenging due to costly logistics.

Plastic waste produced in households, offices, various commercial or manufacturing facilities etc. is normally collected and transported out of the premises unprocessed. Need for transportation hinders an overall recycling process while raising its costs. In this regard, logistics constitutes a significant share of overall recycling costs. Aforesaid problem is generally applicable to plastics used in packaging, such as plastic bottles, boxes, containers, bags etc., and, in particular, to bulky packaging materials of low density, such as expanded polystyrene (EPS) foams. Expanded polystyrene, also known by the Dow Chemical Company's trademarked name Styrofoam, is an extremely lightweight product that is made of polystyrene beads and containing more than 95% air. Wasted EPS foams thus require significant volumetric reduction prior to transportation thereof to a recycling plant in order to ensure cost-effectiveness of a recycling process. Moreover, costly logistics leads to a situation, when virgin EPS material could be obtained at lower expenses as compared with recycled product.

A number of processing methods exists for recycling wasted EPS bulk. Generally these conventional methods may be divided into two groups: methods involving heat treatment and methods involving mechanical compression. Independent on the nature of treatment employed (i.e. thermal or mechanical) all mentioned methods aim at changing the state of expanded polystyrene bulk into more dense and compact, thus producing an end product having an increased density. Space requirements for storing and transporting thermoplastic bulk intended for recycling are therefore reduced.

Each of the aforesaid methods may further involve a crushing step, during which EPS bulk is crushed, shredded or grinded into smaller pieces or particles. In this regard, four categories of methods for processing expanded polystyrene bulk waste may be identified, namely:
1. Compression;
2. Compression preceded by crushing;
3. Thermal treatment (melting); and
4. Thermal treatment preceded by crushing.

Each of said methods and apparatuses exploited thereby are briefly summarized hereinbelow.

Based on mechanical compression methods 1 and 2 are performed by compacting machines. Method 1 is thus implemented by means of an exemplary compactor apparatus equipped with a dozer blade driven by a hydraulic cylinder or an electric motor controlled plunger. Wasted EPS items are compacted upon propagation of a dozer blade or a plunger within a compression chamber, after that the dozer blade is returned to its initial position. By the way of example generally known waste compressors can be mentioned, which are commonly utilized for compacting EPS boxes used in e.g. food processing industry. By aforesaid method and apparatus each EPS box may be compressed to approximately 80% of its original volume. In other words, achievable compression rate constitutes only 20% or one fifth of the original volume. The reason for both method's and apparatuses inefficiency is air contained in the structure of expanded polystyrene and being a reason for which expanded polystyrene has a tendency to acquire its original shape.

Method 2 exploits so called briquetting apparatuses, which crush EPS items to smaller particles by means of screw- or piston extruders, for example, and compress crushed EPS bulk to a desired shape, commonly into briquettes or solid logs or rods. An exemplary system, based on preliminary crushing of expanded polystyrene scrap and further compressing the loose scrap into a compact mass of homogenous rectangular shape, is disclosed in European Patent No. 0,635,345 (Ercolani). Still, Method 2 does not provide for a compressed EPS item having air content reduced to a sufficiently low extent.

Thermal treatment or so called thermal densification based methods 3 and 4 involve temperature-controlled melting of thermoplastics, in particular EPS, inside a heated chamber. Method 3 thus implies melting EPS items in sealed chamber and discharging molten polystyrene bulk into receptacles of desired shape, followed by withdrawal of a receptacle from heated chamber and transferring for cooling. The method and the apparatuses exploited thereby allow for structural disintegration of expanded polystyrene and for removal most of the air therefrom so, that density of an end product approaches that of polystyrene, and the end product could be re-used as a raw material for further manufacturing of polystyrene items in virtually unaltered form. An exemplary apparatus for heat-densifying expanded polystyrene is disclosed in US Patent No. 8,202,077 (Major).

The drawback of thermal densification based methods (Method 3) is that maintaining a required temperature in the chamber throughout the day turns out to be energy inefficient; from the other hand, cooling and re-heating of the apparatus, associated with on-and-off operation thereof results in significant waste of energy and time.

Method 4 and its operating principle is the same as described for the Method 3, with the addition of the crushing step before actual melting. The apparatus for implementing said method is therefore equipped with a crusher, which reduces size of EPS particles intended for thermal densification, thus accelerating a melting process.

According to abovesaid, prior art related methods and apparatuses are constrained with technical problems, associated with inefficiency and slowness of the existing equipment and/or failure thereof to provide a thermoplastic product and, in particular, polystyrene product, compacted to an extent, which would render said product suitable for further recycling in a cost-effective manner.

Thus, methods involving mechanical compression (Methods 1 and 2) and apparatuses utilized thereby fail to provide a sufficiently dense end product. Density of the compacted product obtained by said methods does not change significantly in comparison with that of an uncompressed product, therefore, mechanically compressed EPS items require further treatment (e.g. thermal densification), aiming at air removal from the foamed structure. From the other hand, methods involving thermal densification (Methods 3 and 4) allow for obtaining an end product with higher compression ratios (up to 95%), however, said methods are rather slow, energy inefficient and may involve health risks. Moreover, apparatuses for thermal treatment of EPS could not be left unattended and require constant presence of an operator.

In US 4,371,328 (Giles) a compacting apparatus is disclosed for compacting wood and coal products, said apparatus comprising a rotating frame, in which a plurality of cylindrical channels are provided. Each such cylindrical channel incorporates a compression die. The apparatus is further equipped with heated hydraulic compression means for pushing feedstock into the die. However, the hydraulic piston does not enter the die. Additionally, compacted product is removed from the die by means of the second hydraulic means. In the apparatus, loading and compression operations are performed with regard to the same die.

In US 6,132,655 (Ray) an apparatus is disclosed for reclamation of thermoplastic materials, wherein compression is performed along with agitation of feedstock. The apparatus comprises a table with an aperture, and rotating plates having two open-ended cylinders disposed therebetween. Aperture is positioned in the table so that as plates are rotated, cylinders are consecutively moved into alignment coaxially with it, whereby an agitating disk fills the aperture. Feedstock is loaded into the first cylinder; thereafter the plates are rotated to align the loaded cylinder with the agitation disk and a compression cylinder. Compression is not accompanied by heating and is performed at a pressure of 2-3 psi.

NL 1002391 discloses a device for compressing plastic waste material by means of a press plunger.

Therefore, provision of methods and/or apparatuses for rapid and cost-effective compacting of thermoplastic waste, in particular expanded polystyrene wasted articles, with high compaction rates, is still desirable.

### SUMMARY OF THE INVENTION

An objective of the present invention is to obviate one or more problems arising from limitations and disadvantages of the related art.

The objective is achieved by providing an apparatus according to claim 1, an assembly according to claim 8 comprising said apparatus and a method according to claim 12 suitable for compressing wasted thermoplastic materials and, in particular, expanded polystyrene and/or expanded polystyrene foams, intended for recycling, to a volumetrically most compact form.

In one aspect an apparatus for compacting thermoplastic feedstock is provided, comprising a rotary unit disposed between first and second stationary panels, said rotary unit comprises a number of hollow, tubular chambers, symmetrically arranged around a rotation axis and horizontally disposed between rotary disks such that end portions of each tubular chamber traverse said disks and protrude outward from exterior surfaces thereof, said rotary unit further comprises a number of heating elements, disposed between rotary disks such that each heating element encloses a corresponding tubular chamber; wherein the first stationary panel is a front panel and comprises a first aperture and a second aperture, arranged to conform to end openings of any two adjacent tubular chambers, and wherein the second stationary panel is a back panel and comprises an aperture arranged to conform to an end opening of any of the tubular chambers and to align in horizontal plane with the second aperture of the front panel.

In some embodiment the compactor apparatus comprises an axle shaft forming a rotation axis for the rotary unit.

In some embodiment the compactor apparatus further comprises a stationary casing for receiving the rotary unit.

In one preferred embodiment the rotary unit of the compactor apparatus comprises four tubular chambers symmetrically arranged around a rotation axis such that each chamber is separated from the two adjacent chambers by a 90-degree turn.

In one preferred embodiment the rotary unit is configured to rotate stepwise, each time executing a 90-degree turn around a central shaft in clockwise direction.

In some embodiment the apertures arranged in the front panel and in the back panel of the compactor apparatus bear identical shape, size and diameter.

In some embodiment the compactor apparatus comprises a shutter mountable against the back panel aperture for sealing thereof during compaction operation. In some further embodiment the shutter is driven by external force, e.g. hydraulically.

In some embodiment the compactor apparatus comprises a locking element for fixing the rotary unit in static position.

In some embodiment the heating elements of the compactor apparatus are provided in the form of coiled resistors.

In some embodiment the compactor apparatus comprises a number of expansion elements for performing a shock absorbing/damping function and positioned to encircle end portions of each tubular chamber protruded outward from exterior surfaces of the rotary disks provided within the rotary unit.

In another aspect an assembly for processing and compacting thermoplastic feedstock is provided, comprising a crusher, a conveying means, a compactor apparatus implemented in accordance with the previous aspect and a compressor element, wherein the crusher is arranged to pre-cut raw feedstock to reduce physical size thereof, wherein the conveying means is arranged to convey size-reduce feedstock towards the compactor apparatus and wherein the compactor apparatus is arranged to receive said size-reduced feedstock into one of the tubular chambers via the first aperture of the front panel, and wherein the compactor apparatus is further arranged to receive the compressor element into the tubular chamber, adjacent to the feedstock receiving chamber, via the second aperture of the front panel, said compressor element is arranged to execute a linear reciprocating movement inside the tubular chamber in direction of the back panel aperture, and wherein the heating elements are arranged to supply thermal energy to corresponding tubular chambers during compaction operation.

In one preferred embodiment the assembly comprises the compactor apparatus, arranged to receive the compressor element into the tubular chamber, separated from the feedstock receiving chamber by a 90-degree turn.

In some embodiment the assembly comprises the conveying means in the form of a screw conveyor.

In some embodiment the assembly comprises the compressor element in the form of a hydraulically driven piston or a plunger.

In some embodiment the assembly comprises the crusher equipped with rotating blades. In some further embodiment the crusher is arranged to cut raw feedstock to pieces or particles having physical size in a range of 0,1 - 100 mm, preferably, 20 × 20 mm.

In some other embodiment the assembly further comprises a feeder device arranged upstream with regard to the crusher and further provided with rotating blades. In still further embodiment the assembly additionally comprises a second conveying means for conveying compacted product to a collection tray, arranged downstream with regard to the compactor apparatus.

In some preferred embodiment the assembly is adjusted for processing and compacting expanded polystyrene (EPS) and/or expanded polystyrene foams, in particular, wasted EPS packaging boxes.

In further aspect a method for processing and compacting thermoplastic feedstock is provided by means of the assembly implemented in accordance with one of the previous aspects, said method comprises at least the following steps:
a) reduce physical size of raw feedstock in the crusher;
b) convey size-reduced feedstock towards the compactor apparatus by conveying means;
c) supply size-reduced feedstock into one of the tubular chambers via the feedstock supply port until receiving a signal that filling is complete;
d) set the rotary unit to execute rotational motion until the feedstock containing chamber is brought into an alignment with the compressor element entrance port while one of the tubular chambers, adjacent to the feedstock containing chamber, is brought into an alignment with the feedstock supply port;
e) perform step (c) with regard to the tubular chamber brought into alignment with the feedstock supply port;
f) simultaneously with step (c) set the compressor element to enter the feedstock containing chamber, brought into alignment with the compressor element entrance port, via said port and to execute linear movement inside said feedstock containing chamber in a direction of a discharge port, sealed by the shutter, until receiving a signal that a desired degree of compaction is achieved;
g) return the compressor element to an initial position;
h) perform steps (d-g) until receiving a signal that a compacted product formed upon feedstock compression in one of the tubular chambers has reached a predetermined length;
i) release the shutter and discharge the compacted product via the appropriate aperture.

In one preferred embodiment the heating elements of the compactor apparatus are arranged to supply thermal energy to corresponding tubular chambers during compaction operation.

In one preferred embodiment the rotary unit of the compactor apparatus is locked in static position in periods between rotations by the locking element.

In further aspect a compacted polystyrene product obtainable by the method of the previous aspect is provided, said product being in the form of an elongated rod having bulk density at least 1000 kg/m³ and having air content within a range of 0,1% - 1%, preferably, 0,25% - 0,5% and further characterized by high consistency and by the absence of nonmolten particles.

The utility of the present invention arises from a variety of reasons depending on each particular embodiment thereof. At first, the invention provides means for compaction treatment of thermoplastic waste, in particular, expanded polystyrene waste, after which treatment said waste fails to acquire its original shape and volume, but preserves a compacted, denser state. The method and apparatus/assembly disclosed hereby allow for increasing bulk density of wasted EPS items 68-72 times in comparison with that of porous waste feedstock. Consequently, the invention also provides for saving space, otherwise required for storage and/or transportation of wasted bulky EPS items. Space reduction ratio of up to 175 : 1 can thus be achieved.

The inventive apparatus and assembly are highly scalable and therefore can be utilized in various production plants and/or other facilities, in which plastic waste is generated. Installation of the compacting assembly, as disclosed herewith, in such a facility will allow compacting generated waste on-site, thus eliminating a need for transporting said waste elsewhere.

The inventive apparatus utilizes combined thermal- and pressure impact to transform porous thermoplastic waste items into dense mass/bulk, and for subsequent formation of compacted rod-shaped products out of said bulk. Mentioned combination of heat and pressure allows producing a highly consistent compacted product, in which presence of non-molten/non-fused particles is entirely omitted. In addition of being dense and having a pre-determined shape said compacted product is practically odorless. Therefore, said compacted product does not require after-treatments and can be utilized directly for further recycling.

In whole, the invention aims at improving recycling rates of thermoplastic- and, in particular, EPS waste by considerably reducing logistics' derived costs and/or increasing cost-effectiveness of the recycling process.

In present specification, when referring to plastics, a particular reference is made to thermoplastic polymers, since thermoplastics are commonly utilized by packaging industry and are applicable for re-use/re-shape upon heating thus being suitable for recycling.

The term "compression" may be utilized in present disclosure as a synonym to the term "compaction", thus being indicative of size reduction of a treated article to a volumetrically most compact form, unless otherwise explicitly indicated.

The expression "a number of' refers herein to any positive integer starting from one (1), e.g. to one, two, or three. The expression "a plurality of' refers herein to any positive integer starting from two (2), e.g. to two, three, or four.

The term "element" may herein refer also to a multi-part element with multiple functionally and/or physically connected elements in addition to single-part or integrated elements.

The terms "first" and "second" are used herein to distinguish an element from other element and not to denote any particular order or importance, unless otherwise explicitly indicated.

Different embodiments of the present invention will become apparent by consideration of the detailed description and accompanying drawings.

### BRIEF DESCRIPTION OF THE DRAWINGS

Fig. 1 is a general exploded view of a compactor apparatus 100.
Fig. 2 shows arrangement of processing chambers with regard to supply-/discharge ports in the apparatus 100.
Figs. 3 and 4 show front and back panels of the apparatus 100, accordingly.
Figs. 5 and 6 show a rotary unit 101 comprised in the apparatus 100.
Figs. 7-9 show various elements comprised in the apparatus 100.
Fig. 10 is a detailed exploded view of the apparatus 100.
Fig. 11 is a schematic representation of a compacting assembly 500.

### DETAILED DESCRIPTION OF THE EMBODIMENTS

Detailed embodiments of the present invention are disclosed herein with the reference to accompanying drawings. The same reference characters are used throughout the drawings to refer to same members. Following citations are used for the members:
100 - a compactor apparatus;
101 - a rotary unit;
1 - a front panel;
2 - a first front panel's functional aperture (feedstock supply port);
3 - a front panel central opening for an axle shaft;
4 - a front panel opening for a locking element;
5 - a back panel;
6 - a back panel' functional aperture (product discharge port);
7 - a back panel central opening for an axle shaft;
8, 9 - rotary disks;
10, 11, 12, 13 - processing chambers 1-4
14, 15, 16, 17, 18, 19, 20, 21 - expansion elements;
22, 23, 24, 25 - heating elements;
30 - an axle shaft;
31 - positioning hole series;
32 - a locking element;
34 - a protective casing;
35 - a compressor element;
36 - a second front panel's functional aperture (compressor element entrance port);
37 - a shutter for sealing the discharge port;
500 - a compacting assembly;
300 - a crusher;
200 - a conveying means.

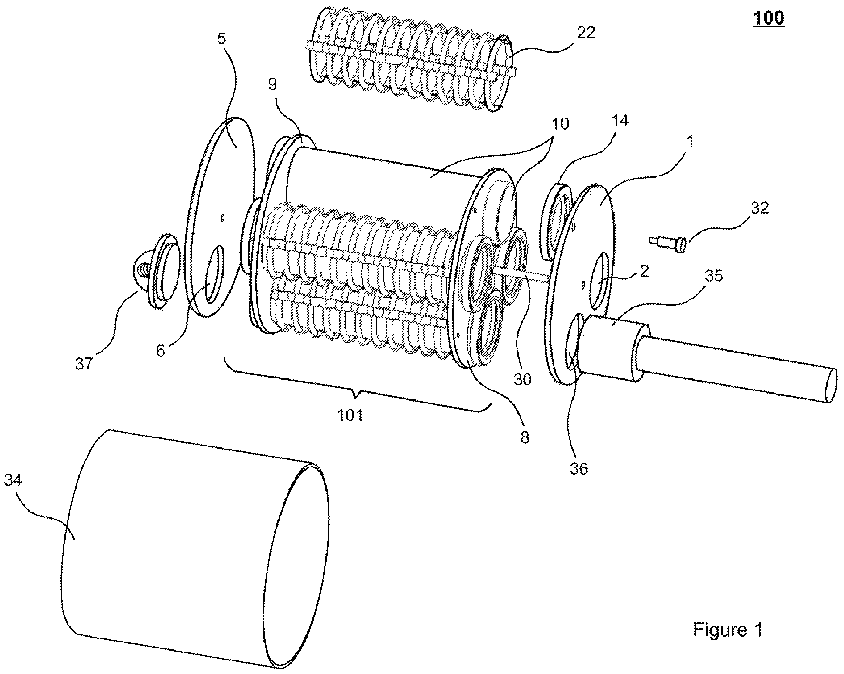

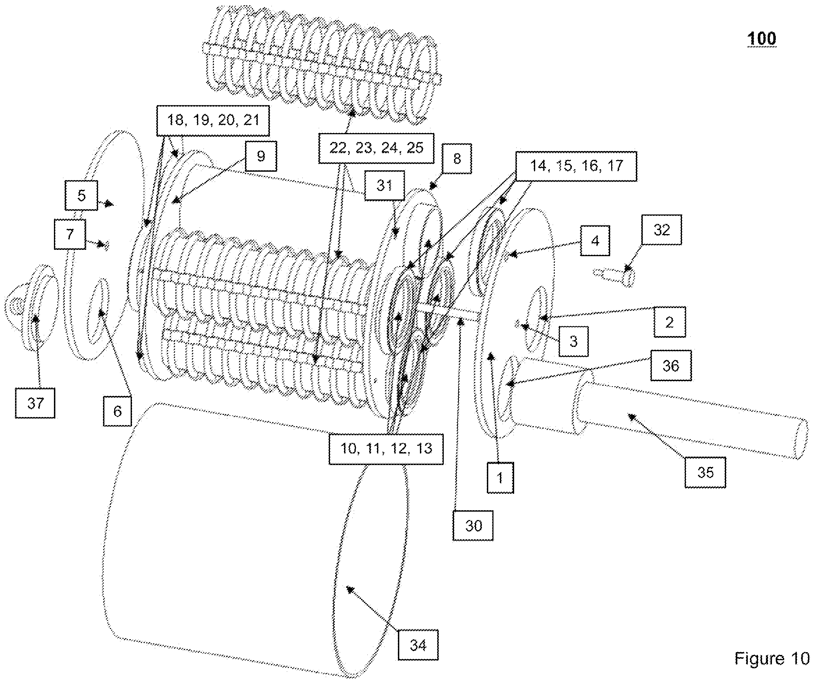

In one aspect of the invention a compactor apparatus 100 for compacting thermoplastic materials, in particular, of expanded polystyrene (EPS) and/or EPS foams intended for recycling is provided (Figs. 1, 10). The apparatus 100 comprises a rotary unit 101 disposed between first and second side panels 1 and 5, wherein the first side panel 1 is defined as a front panel and the second side panel is defined as a back panel. The rotary unit 101, as follows from the nomenclature, constitutes a part of the apparatus 100 capable of performing revolving/rotational movement. Revolving movement of the rotary unit 101 is executed around a central (rotation) axis. On the contrary, provision of the side panels 1 and 5 with regard to the rotary unit 101 is stationary.

The rotary unit 101 comprises two rotary disks 8 and 9 located opposite to each other and a number of hollow, tubular chambers 10, 11, 12, 13 symmetrically arranged around a rotation axis and horizontally disposed between interior surfaces of said rotary disks 8, 9. By the term "interior surfaces" we refer to those surfaces of the disks 8, 9 facing each other. By their exterior surfaces the rotary disks are arranged to face stationary side panels 1, and 5. Thus, Fig. 1 shows that disk 8 is arranged to face the front panel 1, whereas disk 9 - the back panel 5. Disks 8, 9 advantageously comprise a number of symmetrical apertures (not shown) for receiving end portions of tubular chambers 10, 11, 12, 13. Tubular chambers 10, 11, 12, 13 are therefore grouped around a rotation axis such that end portions of each tubular chamber traverse rotary disks 8, 9 and protrude outward from exterior surfaces thereof (Figs. 1, 2, 10). Fig. 1 shows that while main body of the exemplary tubular chamber 10 is positioned between the rotary disks 8 and 9, the end portions of said chamber 10 traverse rotary disks and form protrusions at the exterior surfaces thereof. Each tubular chamber 10, 11, 12, 13 further bears an opening at both of its ends and has a hollow interior.

The rotary unit 101 further comprises a number of heating elements 22, 23, 24, 25. Said heating elements are disposed between rotary disks 8, 9 such that each heating element encloses a corresponding tubular chamber (Figs. 1, 2, 10). Each heating element is advantageously provided in the form of a coiled resistor, however, any other implementation, such as heating hoods, wires, strips, rods etc. are not excluded. Provision of each heating element is generally such to ensure uniform heating throughout the whole surface of the tubular processing chamber. In preferred embodiment each heating element is winded around the corresponding tubular chamber. Fig. 1 shows the exemplary heating element 22 in the form of coiled winding placed apart from its corresponding tubular chamber 10, and also a number of tubular chambers ready-fitted into corresponding coiled heating elements.

In preferred embodiment the apparatus 100 further comprises an axle shaft 30, forming a rotation axis for the rotary unit 101 (Figs. 1, 10). In some other embodiment the axle shaft may be omitted from the implementation; in this case the rotary unit 101 may be set to rotate around a virtual central axis by supplementary gearing disposed on the rotary disks 8, 9, for example.

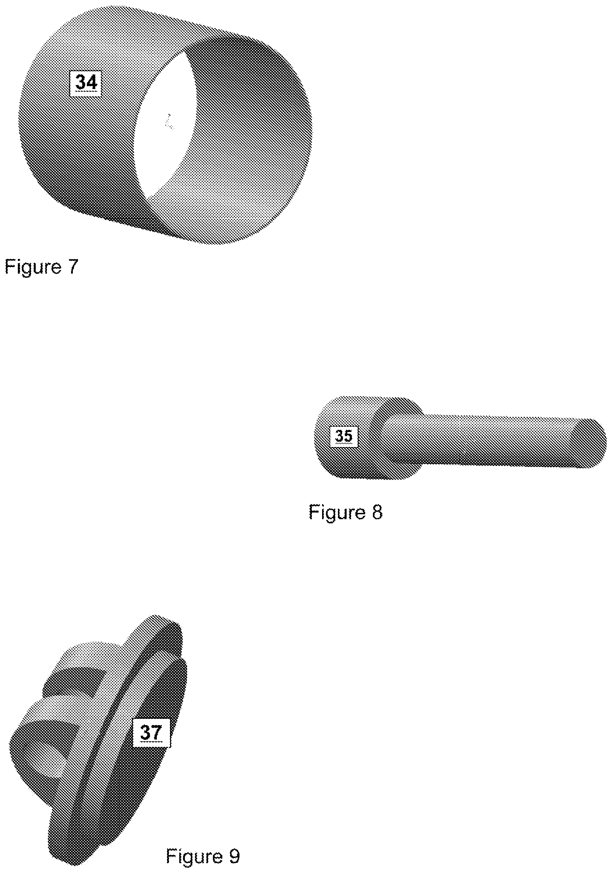

In some embodiment the apparatus 100 further comprises a protective casing 34 (Figs. 1, 7) for receiving and encapsulating the rotary unit 101. The casing 34 is advantageously configured as a hollow, regular cylinder. The side panels 1 and 5 then represent bases of said cylinder. Attachment of the side panels 1 and 5 to the casing 34 may be implemented by any suitable means; said attachment may be either permanent or removable.

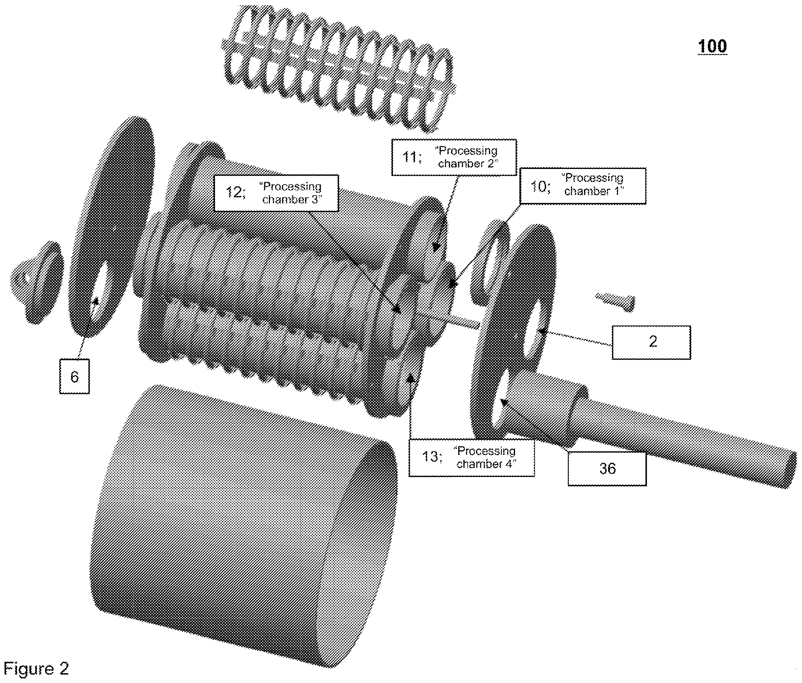

Reference is made next to Fig. 2, illustrating arrangement of the tubular chambers in the rotary unit 101 in accordance with one preferred embodiment. The rotary unit 101 shown on Fig. 2 thus comprises four tubular chambers 10, 11, 12, 13, arranged in symmetrical pairs around a rotation axis, represented herein by the axle shaft 30, such that each tubular chamber is separated from two adjacent chambers by a 90-degree turn in clockwise and counterclockwise directions, accordingly. Each tubular chamber is surrounded by a corresponding heating element, herein, coiled resistor. Tubular chambers 10, 11, 12, 13, also referred to as "processing chambers 1, 2, 3, 4", accordingly, are thus arranged into symmetrical pairs, defined as 1:3 and 2:4. Side profile of the rotary unit 101 (as viewed from each of the rotary disks' 8, 9 side) would thus represent a circle, each quarter of said circle (quadrant) comprising an opening of an individual tubular chamber.

Such an arrangement constitutes the most beneficial implementation for the apparatus 100. Still, other implementations, comprising a smaller (but no less than two) or larger number of tubular chambers, are not excluded.

Tubular chambers 10, 11, 12, 13 are preferably implemented identical, at least in terms of mechanical parameters, such as length, diameter etc. Still, the individual tubular chambers could differ from each other in terms of e.g. chemical composition, being manufactured from different alloys, for example.

Provision of the apparatus 100 thus allows each tubular chamber 10, 11, 12, 13 to operate as an independent feedstock material processing chamber, in accordance with further description.

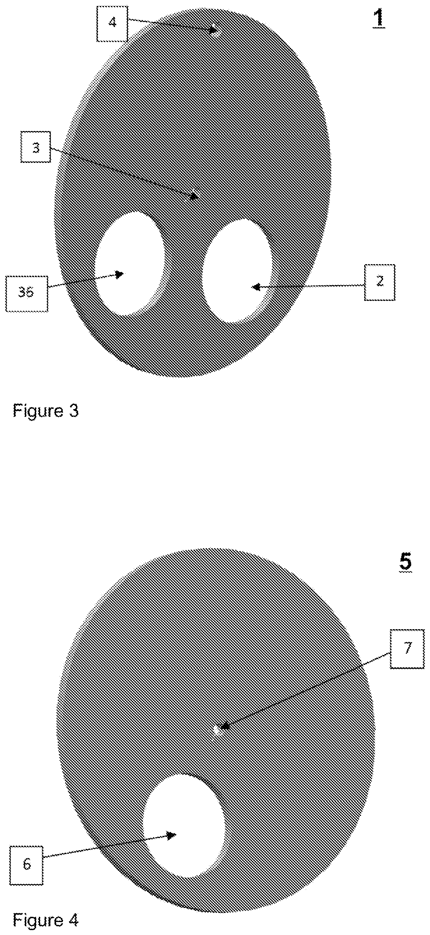

Reference is made next to Figs. 3 and 4, illustrating the front panel 1 (Fig. 3) and the back panel 5 (Fig. 4) of the apparatus 100 in accordance to one preferred embodiment. The front panel 1 (Fig. 3) thus constitutes a disk, comprising a first aperture 2 and a second aperture 36, arranged to conform to end openings of any two adjacent tubular chambers 10, 11, 12, 13. In embodiment disclosed herewith the apertures 2 and 36 are disposed next to each other. The apparatus may still be embodied such that disposition of apertures 2 and 36 does not necessarily conform to the example shown on Fig. 3. The apertures 2 and 36 are referred to as "functional", because regardless of bearing substantially identical technical parameters (e.g. size, shape, diameter etc.) said apertures are advantageously utilized for executing different apparatus-related functions, such as inputting feedstock (aperture 2) and receiving a compressor element (aperture 36). In this regard, the reference is made to the first aperture 2 of the front panel 1 as a "feedstock supply port", and to the second aperture 36 of the front panel 1 - as a "compressor element entrance port", accordingly.

Disposition of the front panel 1 with regard to the rotary unit 101 and, in particular, to the rotary disk 8 is therefore such that adjacent functional apertures 2 and 36 are positioned to face the openings of two adjacent tubular chambers. Fig. 2 shows an exemplary arrangement, wherein the tubular chamber 10 ("Processing chamber 1") of the rotary unit 101 is brought into alignment with the first functional aperture 2 and the tubular chamber 13 ("Processing chamber 4"), separated from the tubular chamber 10 by a 90-degree turn in clockwise direction, is aligned with the second functional aperture 36. It should be understood, that due to stepwise rotation of the rotary unit 101, wherein each step is represented by a 90-degree turn or a one-quarter turn in clockwise direction, any pair of the adjacent processing chambers "1:4", "4:3", "3:2" and "2:1" (Fig. 2), could be aligned with the functional apertures 2 and 36. The rotary unit thus revolves around the central axis, represented by the axle shaft 30, to bring each pair of adjacent tubular chambers into alignment with mentioned functional apertures 2 and 36.

The term "adjacent" is utilized herein to indicate disposition of any two neighboring elements located next to each other. A compactor apparatus may be alternatively embodied to comprise two tubular chambers separated by a 180-degree turn, or three tubular chambers, separated by a 120-degree turn, etc. The apparatus of mentioned alternative embodiments is still considered to comprise adjacent tubular chambers.

The front panel 1 further comprises an opening 4 (Fig. 3) for receiving a locking element 32, as discussed further below.

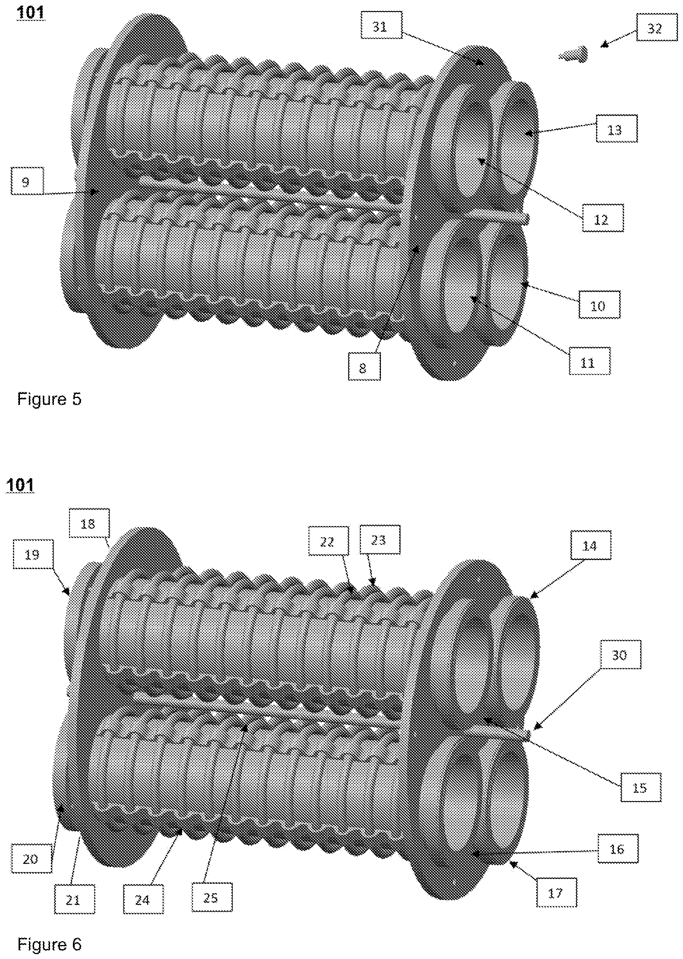

The back panel 5 (Fig. 5) constitutes a disk, having the same diameter as the front panel 1 and comprising an aperture 6 arranged to conform to an end opening of any of the tubular chambers 10, 11, 12, 13 and to align in horizontal plane with the second aperture 36 of the front panel 1. The aperture 6 is also referred to as "functional", since being utilized for enabling apparatuses' 100 discharge. In this regard, the reference is made to the aperture 6 of the back panel 5 as a "discharge port".

Disposition of the back panel 5 with regard to the rotary unit 101 is such that the back panel's functional aperture 6 is arranged to align with the front panel's second functional aperture 36 (Fig. 2). Back panel aperture 6 is thus brought into alignment with an opening of any of the tubular chambers 10, 11, 12, 13, whose opposite end is aligned with the front panel's second functional aperture 36. A processing chamber is thus created having an entrance, represented by the aperture 36, and an exit, represented by the aperture 6. Functionality of such a specific arrangement is explained further below.

The functional apertures 2, 36 (front panel) and 6 (back panel) at least by size, shape and diameter thereof are adjusted to conform to corresponding end openings of any of the tubular chambers 10, 11, 12, 13. In the preferred embodiment the apparatus 100 is implemented to comprise four tubular chambers, each implemented in the form of a regular hollow cylinder having a uniform diameter throughout its length. Accordingly, such an arrangement implies that all the functional apertures 2, 36 and 6 bear substantially identical technical parameters, such as shape, size and diameter.

In one embodiment both front- and back panels 1 and 5 further comprise identical central openings for the axle shaft 30. For clarity purposes the central opening on the front panel 1 is indicated by reference numeral 3, whereas the central opening on the back panel 5 is indicated by reference numeral 7.

The axle shaft 30 (Figs. 1, 10) represents herein a fixed central (rotation) axis around which revolving movement of the rotary unit 101 is executed. In preferred embodiment the rotary unit 101 is arranged to rotate clockwise. The apparatus 100 may still be adapted for a counterclockwise rotation of the rotary unit 101.

The apparatus 100 is further equipped with a shutter 37 (Figs. 1, 9 and 10), mountable against the back panel aperture 6 for sealing said aperture during loading and compaction. In preferred embodiment the shutter 37 is driven by external force, e.g. hydraulically. By disengaging the shutter 37 from the back panel 5 of the apparatus 100 a compacted product may be discharged from any of the tubular chambers 10, 11, 12, 13 and collected via the back panel aperture 6, functioning as a discharge port. Opening and closing of the shutter 37 is preferably automated in response to an external signal.

Figs. 5 and 6 illustrate the rotary unit 101 and elements comprised therein in more detail. Fig. 6 shows the rotary unit 101 implemented in accordance with one preferred embodiment and comprising four substantially identical tubular chambers 10, 11, 12, 13, each enclosed into or surrounded by a heating element 22, 23, 24, 25 represented by a resistor winding. The length of each heating element is defined by the distance between disks 8 and 9, corresponding to the length of the main body of each corresponding tubular chamber.

The rotary disk 8 further comprises series of positioning holes 31 (Fig. 5), each of said holes is implemented compatible with the opening 4 of the front panel 1 and the locking element 32. In embodiment disclosed herewith the series 31 comprise four holes, separated by a 90-degree turn, thus allowing fixation of the rotary unit 101 in four different positions with regard to the front panel 1. In particular, the discussed above pairwise alignment of the first and the second functional apertures 2 and 36 of the front panel 1 with the end openings of any two adjacent tubular chambers 10, 11, 12, 13, separated by a 90-degree- or a one-quarter turn, could be achieved.

Provision of the apparatus 100 is such that while the rotary unit 101 is arranged to revolve around the central axis, the side panels 1 and 5 and the casing 34 remain static (i.e. not subjected to rotational movement). The locking element 32 (Fig. 5) ensures fixation of the rotary unit 101 by locking the rotary disk 8 of said rotary unit to the stationary front panel 1 (via the aperture 4) during certain operating stages of the apparatus 100, as disclosed further. In practice, said locking element 32 is adjusted to fix the rotary unit 101 in static position in periods between rotations. The locking element 32 is preferably equipped with an automatic locking mechanism set up to automatically perform locking and releasing actions in response to an external signal. Provision of the locking mechanism can be of any common type, applicable for the purposes of the invention. The locking element 32 is preferably equipped also with manually operated locking and unlocking means.

The rotary unit 101 is further equipped with a number of expansion elements 14, 15, 16, 17, 18, 19, 20, 21 (Fig. 6), implemented as ring-shaped elements positioned to encircle end portions of each tubular chamber 10, 11, 12, 13 protruded outward from exterior surfaces of the disks 8 and 9. Each tubular chamber is thus provided with two expansion elements. Figure 6 shows four expansion elements 14, 15, 16 and 17, encircling end portions of the tubular chambers 10, 11, 12, 13 (see Fig. 5) protruding over the disk 8, and four expansion elements 18, 19, 20 and 21, encircling opposite end portions of the same tubular chambers, but protruding over the disk 9. Said expansion elements, positioned between a rotary disk 8, 9 and an outer panel 1, 5, act as shock absorbers/dampers, capable of compensating for the differing thermal expansion between two materials.

Compaction of feedstock in the apparatus 100 is implemented by a compressor element 35, such as a hydraulically driven piston or plunger (Figs. 1, 8 and 10). In preferred embodiment the compressor element 35 is received by the second front panel's aperture 36, functioning as the compressor element entrance port. Accordingly, the compressor element 35 enters any of the tubular chambers 10, 11, 12, 13 being currently aligned with said aperture 36 and executes a linear reciprocating movement inside said tubular chamber in direction of the back panel aperture 6, sealed by the shutter 37 during the compaction operation. After compaction is complete the compressor element 35 is reciprocated back to its initial position to enable unhindered rotation of the rotary unit 101.

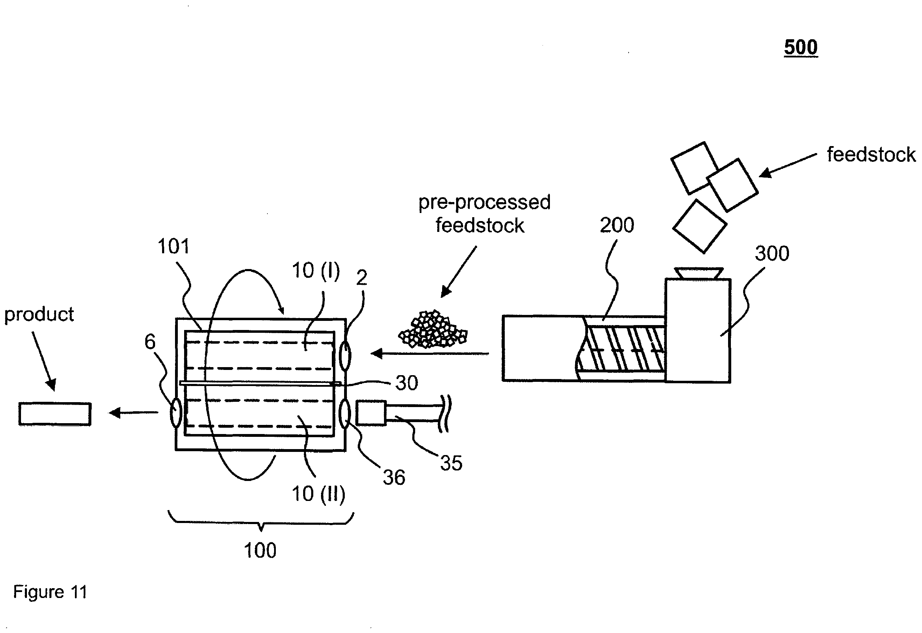

In another aspect of the invention a compacting assembly 500 is provided. Fig. 11 schematically illustrates the assembly 500, comprising the apparatus 100, implemented in accordance with the previous aspect, a crusher 300, a conveying means 200 and the compressor element 35. Since Fig. 11 provides merely schematic view of the assembly 500 the objects and/or elements shown therein are not necessarily adjusted to scale.

By the term "crusher" we refer to any equipment suitable to crush, cut, shred and/or grind wasted thermoplastic material, in particular, expanded polystyrene material, into smaller pieces/particles, suitable for further processing by the compactor apparatus 100. In preferred embodiment the crusher 300 is equipped with rotating blades capable of crushing wasted EPS items to smaller pieces/particles having an approximate size within the range of 0,1 - 30 mm, preferably 20 x 20 mm. In some embodiment the assembly 500 may further comprise a feeder device (not shown), located upstream to the crusher 300 and configured to cut large EPS items into medium pieces having an approximate size of 100 × 100 mm by means of rotating blades, for example. These medium pieces are further delivered to the crusher 300 for further size reduction by e.g. the force of gravity.

Rotating blades' equipped crusher and feeder devices are driven by e.g. electric motor(s) further provided by suitable transmission elements, such as open- or chained gearing, for example. In preferred embodiment the crusher 300 is further equipped with sensor element(s), adapted to detect items being fed thereto and to automatically start up and/or stop the crusher based on results of detection. The crusher is further equipped with the manual ON/OFF switch system.

Conveying means 200 is further provided to convey pre-cut/pre-crushed feedstock material towards the apparatus 100, in particular, towards a feedstock supply port thereof, represented by the front panel functional aperture 2. In preferred embodiment the conveying means is implemented capable of pre-compressing loose feedstock material while conveying it towards the apparatus 100. In preferred embodiment the conveying means 200 is therefore provided in the form of a screw or an auger conveyor; however, any other suitable conveyor/conveyor system can be utilized. Disposition of the conveying means 200 with regards to the crusher 300 is preferably such that pre-crushed feedstock descends into a feed opening/a hopper of said conveying means by the force of gravity.

In one embodiment the conveying means 200 is provided as a horizontally disposed device of an Archimedes' screw type and comprising a 2000 mm long, hollow metallic tube (casing) with an inner diameter 190 mm and a screw, disposed within said casing and having helices' diameter 186 mm (clearance 2 mm). Conveying screw is driven by e.g. electric motor(s) equipped by suitable transmission elements. Rotation speed of the screw may be controlled and/or adjusted by means of a frequency transformer/converter, for example.

The conveying means 200 is disposed between the compactor apparatus 100 and the crusher 300 thus forming a setup for continuous processing of thermoplastic feedstock, in particular, EPS articles, such as EPS packaging boxes, for example. Such an arrangement implies that all three modules 100, 200 and 300 are physically and functionally interconnected. External dimensions of the exemplary assembly 500 (length, height, width) thus constitute 4600 mm × 2800 mm × 2600 mm. Feedstock supplied into the crusher 300 is therefore transferred directly to the compactor apparatus 100 by the conveying means 200. The assembly 500 is preferably configured as a fully automated setup; presence of the operator is not therefore required.

The assembly 500 is preferably realized as a continuous feed type; however, a batch type implementation is not excluded.

The assembly 500 may further comprise a second conveying means (not shown) for conveying compacted product to a collection tray, arranged downstream with regard to the compactor apparatus 100 for further transporting the compacted product to a remote facility, e.g. for further packaging or recycling. Second conveying means are preferably that of belt- or roller conveyor type.

The assembly 500 may further comprise additional elements, such as manual and/or remote controls for an entire assembly and/or any of the compactor apparatus 100, the crusher 300 and the conveying means 200, supplementary mechanisms, such as motor(s), transmission elements, fans or air blowers, sensors; alarm system(s) and the like. Control over the assembly 500 and/or its individual components is preferably realized via a local computer workstation(s) and/or a remote server. Local workstation is advantageously equipped with visualization means, e.g. at least one monitor. A portable workstation may be utilized to control operation of the assembly 500, such as a portable computer or other portable mobile device, being in wired or wireless connection with the local workstation and/or the compacting assembly 500. Provision and installation of all these elements conforms to known technologies; further description thereof will thus be omitted.

In another aspect a method for processing and compacting thermoplastic feedstock by means of the assembly 500 implemented in accordance with one of the previous aspects is provided, said method comprises at least the following steps:
a) reduce physical size of raw feedstock in the crusher 300;
b) convey size-reduced feedstock towards the compactor apparatus 100 by the conveying means 200;
c) supply size-reduced feedstock into one of the tubular chambers 10, 11, 12, 13 via the feedstock supply aperture 2 until receiving a signal that filling is complete;
d) set the rotary unit 101 to execute rotational motion until the feedstock containing chamber is brought into an alignment with the compressor element receiving aperture 36 while one of the tubular chambers, adjacent to the feedstock containing chamber, is brought into an alignment with the feedstock supply aperture 2;
e) perform step (c) with regard to the tubular chamber brought into alignment with the feedstock supply aperture 2;
f) simultaneously with step (e) set the compressor element 35 to enter the feedstock containing chamber, brought into alignment with the compressor element receiving aperture 36 via said aperture 36, and to execute linear movement in a direction of the discharge aperture 6 until receiving a signal that a desired degree of compaction is achieved;
g) return the compressor element 35 to an initial position;
h) perform steps (d-g) until receiving a signal that a compacted product formed upon feedstock compression in one of the tubular chambers 10, 11, 12, 13 has reached a predetermined length;
i) release the shutter 37 and discharge the compacted product via the aperture 6.

The method is explained in more detail by the following example. Reference is made to Fig. 11. Raw feedstock material, preferably comprising of wasted expanded polystyrene and/or EPS foam, such as used EPS packaging boxes, for example, is supplied into the feeder (not shown), wherein large items are cut into medium-sized pieces (about 100 × 100 mm) and further transferred to the crusher 300 (step a). Rotating blade's equipped crusher 300 breaks feedstock material down to yet smaller particles having an approximate size of 0,1 - 30 mm, preferably about 20 × 20 mm. Pre-cut loose feedstock pieces/particles fall into a hopper of the screw conveyor 200 for being conveyed towards the compacting apparatus 100 along with being pre-compressed. Pre-processed (i.e. pre-cut and pre-compressed) feedstock is thus delivered by means of the screw conveyor 200 to the feedstock supply port (step b), represented by the first front panel's functional aperture 2 of the compactor apparatus 100, said apparatus 100 being implemented in accordance with one preferred embodiment. Via feedstock supply port pre-processed feedstock enters one of the four tubular chambers 10, 11, 12, 13 (step c), brought into alignment with the feedstock supply port, herein, the tubular chamber 10 (referred to as the "Processing chamber 1" on Fig. 2). During loading of the tubular chamber 10 by feedstock the rotary unit 101 is fixed in static position by the locking element 32 so that accidental rotation of said rotary unit is prevented. The tubular chamber 10, being supplied by pre-processed feedstock, is indicated on Fig. 11 by reference numeral 10 (I).

It should be understood, that reference numbering used herewith is exemplary so that any one of the tubular chambers 10, 11, 12, 13 of the apparatus 100 may be brought into an alignment with the aperture 2 when the assembly 500 is set into action.

Moreover, disposition of the conveyor 200 and the compressor 35 within the assembly 500 may require different layout of ports 2 and 36 on the front panel of the compactor apparatus 100, as compared with the embodiment shown on Figs. 1, 2 and 10. Said layout may be altered unrestrictedly, as far as the general inventive concept is preserved and the front panel's aperture 36 (compressor element entrance port) is aligned in horizontal plane with the back panel's aperture 6 (discharge port).

While the tubular chamber 10 is supplied with pre-processed feedstock via the front panel's aperture 2, the tubular chamber 13, adjacent to the chamber 10 in clockwise direction (see Fig. 2), is aligned with the second front panels' aperture 36, functioning as a compression element entrance port.

Once the tubular chamber 10 has been loaded with pre-processed feedstock material to a predetermined extent, a signal is sent to the screw conveyor 200 to discontinue conveying. The signal may be generated by a level sensor(s), for example, provided with the apparatus 100 and/or the conveyor 200 or alternatively, pre-calculated based on amount and/or volume of pre-processed material conveyed by the screw conveyor 200 in a unit of time. Filling of the tubular chamber 10 by feedstock is thus completed (end of step c). Next, the rotary unit 101 is unlocked by releasing the connection between the front panel 1 and the rotary disk 8 mediated by the locking element 32. Unlocking is preferably automated; as discussed above, the locking mechanism provided within the locking element 32 is preferably set up to automatically perform locking and releasing actions in response to an external signal, herein, a signal indicative of the conveyor's 200 operating mode. Locking element 32 thus acquires a position upon which unhindered rotation of the rotary unit 101 is enabled. Consequently, the rotary unit 101 executes 90-degree turn clockwise (indicated by a circular arrow on Fig. 11), around a central axis (step d). As a result of this 90-degree rotation the tubular chamber 11 (indicated as a "Processing chamber 2" on Fig. 2) is brought into an alignment with the first functional aperture 2, whereas the tubular chamber 10, being previously aligned with the aperture 2, is now brought into an alignment with the second functional aperture 36. After executing a 90-degree turn the rotary unit 101 stops and locks again to static position by means of the locking element 32. Immediately after that two events simultaneously occur: resumption of the conveyors' 200 operation (step e) and activation of the compressor element 35 (step f). As a consequence, supply of pre-processed feedstock to the apparatus 100 via the first functional aperture 2 is resumed; however, since the rotary unit had revolved 90 degrees clockwise, feedstock is now supplied into the tubular chamber 11, separated from the tubular chamber 10 by a 90-degree turn in counterclockwise direction (step e). On the other hand, a content of the tubular chamber 10, positioned now to a level of the second functional aperture 36, undergoes compaction under mechanical force mediated by the compressor element 35, such as a piston or a plunger, performing a linear reciprocating movement in direction towards the discharge port 6 (Fig. 11) (step f). Tubular chamber 10 whose content undergoes compaction is indicated on Fig. 11 by reference 10 (II).

The tubular processing chamber receiving the compressor element 35 can thus be described as a compression cylinder system. Compressor element 35 is preferably hydraulically driven; however, utilization of any other suitable actuator system is not excluded. EPS feedstock contained in the tubular chamber 10 (see 10 (II), Fig. 11) thus undergoes compaction against the shutter 37, which seals the discharge port 6 during loading and compaction.

The tubular chamber 10 represents in this example a first processing chamber. Hereinafter by the term "processing chamber" we will indicate a tubular chamber whose content is subjected to compaction along with heat treatment.

Compression pressure applied upon compaction varies depending on density of feedstock content in the processing chamber. The denser is feedstock the greater is pressure to be applied. For a tubular chamber having an inner diameter 190 mm, applied pressure varies within the range of 80-120 bar; 100 bar compression pressure is applied for EPS feedstock having density 16 kg/m³.

As mentioned above, each tubular chamber 10, 11, 12 13 is enclosed into or surrounded by a corresponding heating element 22, 23, 24, 25, preferably implemented in the form of a coiled resistor. The content of each processing chamber along with being compacted additionally undergoes heating. In addition to thermal energy supplied by external heating elements, generation of thermal energy occurs also within an interior of each processing chamber, via frictional heating caused by propagation of the compression element 35 into said chamber. Typically, temperature inside the processing chamber during compaction is adjusted and maintained within the range of 180-230 ⁰C (degrees Celsius). Feedstock of higher density requires higher processing temperatures, whereas feedstock of lower density requires lower processing temperatures, accordingly. For example, temperature of 200 ⁰C is maintained inside the processing chamber for EPS feedstock having density 16 kg/m³. Temperature can be measured and regulated by means of thermocouples and/or PID controllers (proportional-integral-derivative controllers).

In present example loading of the 800 mm long tubular chamber with pre-processed EPS feedstock occurs in 7 seconds. After the rotary unit 101 had revolved 90 degrees clockwise around a central axis the content of aforesaid exemplary chamber undergoes compression along with simultaneous heating so, that EPS particles melt, homogenize and compact to form an about 16 mm thin, disk-shaped product. Said disk-shaped product is not yet withdrawn from the apparatus 100, and the compaction process continues. The rotary unit keeps revolving in the same manner, whereupon compression of feedstock in one of the tubular chambers 10, 11, 12, 13 always occurs simultaneously with loading of the adjacent tubular chamber by next portion of feedstock (steps e, f).

Each time after formation of disk-shaped compacted product is complete the compressor element 35 is returned back to its initial position to enable unhindered rotation of the rotary unit 101 (step g).

Executing sequential loading-compression cycles while preserving a compressed product inside processing chambers results in situation, upon which each subsequently formed thin disk stacks to those, already formed during previous cycles; at the same time previously formed disks fuse together under combined heat and pressure impact. A rod-shaped compacted product is thus formed inside each processing chamber, whose length increases with each subsequent loading-compression cycle. Upon loading of tubular chambers already containing a compacted product of some length, an increase in conveyor-associated pressure can be detected. Increase in pressure occurs proportionally to reduction of free space inside each tubular chamber, occurring upon stepwise generation of said compacted product.

Feedstock material is thus compressed in the processing chamber, represented on Fig. 11 by the exemplary tubular chamber 10 (II), until a rod-shaped piece of compacted material, formed inside said processing chamber, reaches a predetermined length, herein, 400 mm (a half of tubular chamber's length, according to the present example) (step h). A moment when said rod-shaped piece had reached a predetermined length is detectable by sensors, e.g. pressure- and/or resistance sensors. A signal is mediated to controller(s), which initiate opening of the shutter 37. The shutter opens at the same speed as compression piston 35 pushes compacted product out of the apparatus 100 via the discharge port 6 (step i). At the same time the second conveying means (not shown) may be set to action to convey compacted product to e.g. collection tray. When compacted product is completely withdrawn out of the apparatus 100 closing of the shutter 37 occurs automatically.

An end product obtained hereby is a compacted polystyrene rod having the following parameters:
- length: 400 mm;
- diameter (crosscut): 190 mm;
- cubic volume: 11,3 dm³;
- weight: 11,8 kg.

Bulk density (weight by volume), defined as weight per unit volume of thus obtained compacted product falls within the range of about 1000-1050 kg/m³. To compare, bulk density of an unprocessed EPS item is about 16 kg/m³. Achievable compaction/compression ratio constitutes therefore at least 60 : 1 and can further be increased. In practice, the compacted product, obtainable by the method and the apparatus/assembly disclosed hereby, has bulk density increased 68-72 times in comparison with that of porous waste feedstock, such as wasted EPS boxes utilized by food industry, for example. In addition, polystyrene rods obtained hereby are characterized by high consistency thereof, indicative of an absence of non-molten/non-fused particles in the product. Another distinctive feature of the product thus obtained is that air content in mentioned compacted polystyrene rod approaches zero value, i.e. the compacted product contains nearly no air. Air content in the polystyrene product obtainable by the method and utilizing the apparatus/assembly disclosed hereby lies within the range of 0,1 - 1%, preferably, 0,25 - 0,5 %.

With current parameters the assembly 500 can be set to process 600 square meters (m³) of wasted EPS material per hour. The assembly is fully scalable; therefore, even greater compaction rates may easily be achieved. Thus compacted polystyrene rods do not require further processing and may be re-used directly.

The inventive concept disclosed herewith is particularly suitable for compaction of articles manufactured from expanded polystyrene (EPS)/EPS foams. Still, the inventive apparatus and assembly may be implemented to process any kind of thermoplastics, including, but not limited to polyethylene terephthalate (PET), polyvinyl chloride (PVC), high-density polyethylene (HDPE), low-density polyethylene (LDPE), polypropylene (PP) or polystyrene (PS).

Consequently, a skilled person may on the basis of this disclosure and general knowledge apply the provided teachings in order to implement the scope of the present invention as defined by the appended claims in each particular use case with necessary modifications, deletions, and additions without diverging from the fulcrum thereof. The invention and its embodiments are thus not limited to the examples described above; instead they may generally vary within the scope of the appended claims.

## Claims

1. An apparatus (100) for compacting thermoplastic feedstock, comprising a rotary unit (101) disposed between first and second stationary panels (1, 5), said rotary unit (101) comprises a number of hollow, tubular chambers (10, 11, 12, 13), in which compaction of feedstock occurs, symmetrically arranged around a rotation axis and horizontally disposed between rotary disks (8, 9) such that end portions of each tubular chamber traverse said disks (8, 9) and protrude outward from exterior surfaces thereof, said rotary unit further comprises a number of heating elements (22, 23, 24, 25), disposed between rotary disks (8, 9) such that each heating element encloses a corresponding tubular chamber; wherein the first stationary panel (1) is a front panel and comprises a first aperture (2) and a second aperture (36), arranged to conform to end openings of any two adjacent tubular chambers (10, 11, 12, 13), and wherein the second stationary panel (5) is a back panel and comprises an aperture (6) arranged to conform to an end opening of any of the tubular chambers (10, 11, 12, 13) and to align in horizontal plane with the second aperture (36) of the front panel (1).

2. The apparatus (100) of claim 1, comprising an axle shaft (30) forming a rotation axis for the rotary unit (101).

3. The apparatus (100) of claim 1, comprising a stationary casing (34) for receiving the rotary unit (101).

4. The apparatus (100) of any of claims 1 and 2, wherein the rotary unit (101) comprises four tubular chambers symmetrically arranged around a rotation axis such that each chamber is separated from two adjacent chambers by a 90-degree turn, and wherein the rotary unit (101) is configured to rotate stepwise, each time executing a 90-degree turn around a rotational axis in clockwise direction.

5. The apparatus (100) of claim 1, wherein apertures (2, 36, 6) bear identical shape, size and diameter.

6. The apparatus (100) of claim 1, comprising a shutter (37) mountable against the back panel aperture (6) for sealing said aperture during compaction operation, and a locking element (32) for fixing the rotary unit (101) in static position.

7. The apparatus (100) of claim 1, comprising a number of expansion elements (14, 15, 16, 17, 18, 19, 20, 21), positioned to encircle end portions of each tubular chamber (10, 11, 12, 13) protruded outward from exterior surfaces of the disks (8, 9).

8. An assembly (500), for processing and compacting thermoplastic feedstock, comprising a crusher (300), a conveying means (200), a compactor apparatus (100) as defined in any of claims 1-7, and a compressor element (35), wherein the crusher (300) is arranged to pre-cut raw feedstock to reduce physical size thereof, wherein the conveying means (200) is arranged to convey size-reduce feedstock towards the compactor apparatus (100) and wherein the apparatus (100) is arranged to receive said size-reduced feedstock into one of the tubular chambers (10, 11, 12, 13) via the first aperture (2) of the front panel (1), and wherein the apparatus (100) is further arranged to receive the compressor element (35) into the tubular chamber, adjacent to the feedstock receiving chamber, via the second aperture (36) of the front panel (1), said compressor element (35) is arranged to execute a linear reciprocating movement inside the tubular chamber in direction of the back panel aperture (6) sealed by a shutter (37), and wherein the heating elements (22, 23, 24, 25) are arranged to supply thermal energy to the content of the corresponding tubular chambers (10, 11, 12, 13) during compaction operation.

9. The assembly (500) of claim 8, wherein the apparatus (100) is arranged to receive the compressor element (35) into the tubular chamber, separated from the feedstock receiving chamber by a 90-degree turn.

10. The assembly (500) of claim 8 further comprising a feeder device for pre-cutting raw feedstock and arranged upstream with regard to the crusher (300) and/or a second conveying means for conveying compacted product to a collection tray, arranged downstream with regard to the compactor apparatus (100).

11. The assembly (500), as defined in claim 8, for processing and compacting expanded polystyrene (EPS) and/or expanded polystyrene foams, in particular, wasted EPS packaging boxes.

12. A method for processing and compacting thermoplastic feedstock by means of the assembly (500), as defined in any of claims 8 and 9, comprising at least the following steps:
a) reduce physical size of raw feedstock in the crusher (300);
b) convey size-reduced feedstock towards the compactor apparatus (100) by the conveying means (200);
c) supply size-reduced feedstock into one of the tubular chambers (10, 11, 12, 13) via the feedstock supply aperture (2) until receiving a signal that filling is complete;
d) set the rotary unit (101) to execute rotational motion until the feedstock containing chamber is brought into an alignment with the compressor element receiving aperture (36) while one of the tubular chambers, adjacent to the feedstock containing chamber, is brought into an alignment with the feedstock supply aperture (2);
e) perform step (c) with regard to the tubular chamber brought into alignment with the feedstock supply aperture (2);
f) simultaneously with step (e) set the compressor element (35) to enter the feedstock containing chamber, brought into alignment with the compressor element receiving aperture (36), via said aperture (36) and to execute linear movement inside said feedstock containing chamber in a direction of the discharge aperture (6), sealed by the shutter (37), until receiving a signal that a desired degree of compaction is achieved;
g) return the compressor element (35) to an initial position;
h) perform steps (d-g) until receiving a signal that a compacted product formed upon feedstock compression in one of the tubular chambers (10, 11, 12, 13) has reached a predetermined length;
i) release the shutter (37) and discharge the compacted product via the aperture (6), wherein thermal energy is supplied to the content of the tubular chambers during compaction operation by the heating elements arranged such, as to surround each tubular chamber (10, 11, 12, 13).

13. The method of claim 12, wherein the rotary unit (101) is locked in static position by a locking element (32) in periods between rotations.

## Patentansprüche

1. Vorrichtung (100) zum Verdichten von thermoplastischem Ausgangsmaterial, die eine Rotationseinheit (101) umfasst, die zwischen einer ersten und einer zweiten stationären Platte (1, 5) angeordnet ist, wobei die Rotationseinheit (101) eine Anzahl hohler, röhrenförmiger Kammern (10, 11, 12, 13) umfasst, in denen die Verdichtung des Ausgangsmaterials erfolgt, die symmetrisch um eine Drehachse angeordnet und horizontal zwischen Drehscheiben (8, 9) angeordnet sind, sodass Endabschnitte jeder rohrförmigen Kammer die Scheiben (8, 9) durchqueren und von deren Außenflächen nach außen ragen, wobei die Rotationseinheit ferner eine Anzahl von Heizelementen (22, 23, 24, 25) umfasst, die zwischen Drehscheiben (8, 9) angeordnet sind, sodass jedes Heizelement eine entsprechende rohrförmige Kammer umschließt; wobei die erste stationäre Platte (1) eine Frontplatte ist und eine erste Öffnung (2) und eine zweite Öffnung (36) aufweist, die so angeordnet sind, dass sie mit den Endöffnungen zweier beliebiger benachbarter rohrförmiger Kammern (10, 11, 12, 13) übereinstimmen, und wobei die zweite stationäre Platte (5) eine Rückwand ist und eine Öffnung (6) aufweist, die so angeordnet ist, dass sie mit einer Endöffnung einer der rohrförmigen Kammern (10, 11, 12, 13) übereinstimmt und in einer horizontalen Ebene mit der zweiten Öffnung (36) der Frontplatte (1) fluchtet.

2. Vorrichtung (100) nach Anspruch 1, die eine Achswelle (30) umfasst, die eine Drehachse für die Rotationseinheit (101) bildet.

3. Vorrichtung (100) nach Anspruch 1, die ein stationäres Gehäuse (34) zur Aufnahme der Rotationseinheit (101) umfasst.

4. Vorrichtung (100) nach einem der Ansprüche 1 und 2, wobei die Rotationseinheit (101) vier röhrenförmige Kammern umfasst, die symmetrisch um eine Rotationsachse angeordnet sind, sodass jede Kammer von zwei benachbarten Kammern durch eine 90-Grad-Drehung getrennt ist, und wobei die Rotationseinheit (101) so ausgelegt ist, dass sie sich schrittweise dreht, wobei jedes Mal eine 90-Grad-Drehung um eine Rotationsachse im Uhrzeigersinn ausgeführt wird.

5. Vorrichtung (100) nach Anspruch 1, wobei die Öffnungen (2, 36, 6) die gleiche Form, Größe und den gleichen Durchmesser aufweisen.

6. Vorrichtung (100) nach Anspruch 1, die einen Verschluss (37), der an der Rückwandöffnung (6) angebracht werden kann, um die Öffnung während des Verdichtungsvorgangs abzudichten, und ein Verriegelungselement (32) zum Fixieren der Rotationseinheit (101) in statischer Position umfasst.

7. Vorrichtung (100) nach Anspruch 1, umfassend eine Anzahl von Ausdehnungselementen (14, 15, 16, 17, 18, 19, 20, 21), die so angeordnet sind, dass sie Endabschnitte jeder rohrförmigen Kammer (10, 11, 12, 13) umgeben, die von den Außenflächen der Scheiben (8, 9) nach außen vorstehen.

8. Baugruppe (500) zum Verarbeiten und Verdichten von thermoplastischem Ausgangsmaterial, die einen Brecher (300), eine Transportvorrichtung (200), eine Verdichtungsvorrichtung (100), wie in einem der Ansprüche 1 bis 7 definiert, und ein Verdichterelement (35) umfasst, wobei der Brecher (300) so angeordnet ist, dass er rohes Ausgangsmaterial vorzerkleinert, um dessen physische Größe zu reduzieren, wobei das Transportmittel (200) so angeordnet ist, dass es zerkleinertes Ausgangsmaterial zu der Verdichtungsvorrichtung (100) transportiert, und wobei die Vorrichtung (100) so angeordnet ist, dass sie das zerkleinerte Ausgangsmaterial in eine der rohrförmigen Kammern (10, 11, 12, 13) über die erste Öffnung (2) der Frontplatte (1) aufnimmt, und wobei die Vorrichtung (100) ferner so angeordnet ist, dass sie das Verdichterelement (35) über die zweite Öffnung (36) der Frontplatte (1) in die rohrförmige Kammer neben der Kammer zur Aufnahme des Ausgangsmaterials aufnimmt, das Verdichterelement (35) so angeordnet ist, dass es eine lineare Hin-und-Her-Bewegung innerhalb der rohrförmigen Kammer in Richtung der Rückwandöffnung (6) ausführt, die durch einen Verschluss (37) verschlossen ist, und wobei die Heizelemente (22, 23, 24, 25) so gestaltet sind, dass sie dem Inhalt der entsprechenden rohrförmigen Kammern (10, 11, 12, 13) während des Verdichtungsvorgangs Wärmeenergie zuführen.

9. Baugruppe (500) nach Anspruch 8, wobei die Vorrichtung (100) so gestaltet ist, dass sie das Verdichterelement (35) in die rohrförmige Kammer aufnimmt, die durch eine 90-Grad-Drehung von der Kammer zur Aufnahme des Ausgangsmaterials getrennt ist.

10. Baugruppe (500) nach Anspruch 8, die ferner eine Zuführvorrichtung zum Vorzerkleinern des Rohmaterials, die in Bezug auf den Brecher (300) stromaufwärts angeordnet ist, und/oder eine zweite Transporteinrichtung zum Transportieren des verdichteten Produkts zu einer Auffangschale umfasst, die in Bezug auf die Verdichtungsvorrichtung (100) stromabwärts angeordnet ist.

11. Baugruppe (500) nach Anspruch 8 zur Verarbeitung und Verdichtung von expandiertem Polystyrol (EPS) und/oder von expandierten Polystyrolschäumen, insbesondere von verbrauchten EPS-Verpackungskartons.

12. Verfahren zum Verarbeiten und Verdichten von thermoplastischem Ausgangsmaterial mittels der in einem der Ansprüche 8 und 9 definierten Anordnung (500), das mindestens die folgenden Schritte umfasst:
a) Verringerung der physischen Abmessungen des Rohmaterials im Brecher (300);
b) Transport des zerkleinerten Ausgangsmaterials zur Verdichtungsvorrichtung (100) durch die Transportvorrichtung (200);
c) Zufuhr von zerkleinertem Ausgangsmaterial in eine der röhrenförmigen Kammern (10, 11, 12, 13) über die Öffnung (2) für die Zufuhr des Ausgangsmaterials bis zum Erhalt eines Signals, dass der Füllvorgang abgeschlossen ist;
d) Einstellen der Rotationseinheit (101), um eine Drehbewegung auszuführen, bis die den Rohstoff enthaltende Kammer in eine Ausrichtung mit der Verdichterelement-Aufnahmeöffnung (36) gebracht wird, während eine der rohrförmigen Kammern, die an die den Rohstoff enthaltende Kammer grenzt, in eine Ausrichtung mit der Rohstoffzufuhröffnung (2) gebracht wird;
e) Ausführung des Schritts (c) in Bezug auf die rohrförmige Kammer, die in Ausrichtung mit der Öffnung (2) für die Zufuhr von Rohmaterial gebracht wird;
f) gleichzeitig mit Schritt (e) das Verdichterelement (35) so einstellen, dass es durch die Öffnung (36) in die das Ausgangsmaterial enthaltende Kammer eintritt, die zu der das Verdichterelement aufnehmenden Öffnung (36) ausgerichtet ist, und eine lineare Bewegung innerhalb der das Ausgangsmaterial enthaltenden Kammer in Richtung der Entladeöffnung (6) ausführt, die durch den Verschluss (37) verschlossen ist, bis ein Signal empfangen wird, dass ein gewünschter Verdichtungsgrad erreicht ist;
g) das Verdichterelement (35) in eine Ausgangsposition zurückbringen;
h) Ausführen der Schritte (d-g) bis zum Erhalt eines Signals, dass ein verdichtetes Produkt, das bei der Verdichtung des Ausgangsmaterials in einer der rohrförmigen Kammern (10, 11, 12, 13) gebildet wurde, eine vorgegebene Länge erreicht hat;
i) Lösen des Verschlusses (37) und Entleeren des verdichteten Produkts über die Öffnung (6), wobei dem Inhalt der rohrförmigen Kammern während des Verdichtungsvorgangs durch die Heizelemente, die so angeordnet sind, dass sie jede rohrförmige Kammer (10, 11, 12, 13) umgeben, Wärmeenergie zugeführt wird.

13. Verfahren nach Anspruch 12, bei dem die Rotationseinheit (101) durch ein Verriegelungselement (32) in den Zeiten zwischen den Umdrehungen in ihrer statischen Position verriegelt wird.

## Revendications

1. Appareil (100) de compactage de matières premières thermoplastiques, comprenant une unité rotative (101) disposée entre des premier et deuxième panneaux stationnaires (1,5), ladite unité rotative (101) comprend un certain nombre de chambres creuses, tubulaires (10, 11, 12, 13), dans lesquelles se produit le compactage des matières premières, agencées de manière symétrique autour d'un axe de rotation et disposées de manière horizontale entre des disques rotatifs (8, 9), de telle sorte que les parties terminales de chaque chambre tubulaire traversent lesdits disques (8, 9) et font saillie vers l'extérieur à partir des surfaces extérieures de celle-ci, ladite unité rotative comprend en outre un certain nombre d'éléments de chauffage (22, 23, 24, 25), disposés entre les disques rotatifs (8, 9) de telle sorte que chaque élément de chauffage renferme une chambre tubulaire correspondante ; dans lequel le premier panneau stationnaire (1) est un panneau avant et comprend une première ouverture (2) et une deuxième ouverture (36), agencées pour se conformer aux ouvertures terminales de deux chambres tubulaires adjacentes quelconques (10, 11, 12, 13), et dans lequel le deuxième panneau stationnaire (5) est un panneau arrière et comprend une ouverture (6) agencée pour se conformer à une ouverture terminale de l'une quelconque des chambres tubulaires (10, 11, 12, 13) et pour s'aligner dans le plan horizontal avec la deuxième ouverture (36) du panneau avant (1).

2. Appareil (100) selon la revendication 1, comprenant un arbre d'essieu (30) formant un axe de rotation pour l'unité rotative (101).

3. Appareil (100) selon la revendication 1, comprenant un boîtier fixe (34) destiné à recevoir unité rotative (101) .

4. Appareil (100) selon l'une quelconque des revendications 1 et 2, dans lequel l'unité rotative (101) comprend quatre chambres tubulaires agencées de façon symétrique autour d'un axe de rotation de telle sorte que chaque chambre est séparée de deux chambres adjacentes par un virage à 90 degrés, et dans lequel l'unité rotative (101) est configurée pour tourner pas à pas, exécutant à chaque fois un virage à 90 degrés autour d'un axe de rotation dans la direction horaire.

5. Appareil (100) selon la revendication 1, dans lequel les ouvertures (2, 36, 6) ont une forme, une taille et un diamètre identiques.

6. Appareil (100) selon la revendication 1, comprenant un obturateur (37) pouvant être monté contre l'ouverture de panneau arrière (6) pour sceller ladite ouverture pendant l'opération de compactage, et un élément de verrouillage (32) pour fixer l'unité rotative (101) en position statique.

7. Appareil (100) selon la revendication 1, comprenant un certain nombre d'éléments d'expansion (14, 15, 16, 17, 18, 19, 20, 21), positionnés de manière à encercler des parties terminales de chaque chambre tubulaire (10, 11, 12, 13) faisant saillie vers l'extérieur depuis des surfaces extérieures des disques (8, 9).

8. Ensemble (500), permettant le traitement et le compactage de matières premières thermoplastiques, comprenant un broyeur (300), un moyen de transport (200), un appareil compacteur (100) tel que défini dans l'une quelconque des revendications 1 à 7, et un élément de compresseur (35), dans lequel le broyeur (300) est agencé pour prédécouper la matière première brute afin de réduire la taille physique de celle-ci, dans lequel le moyen de transport (200) est agencé pour transporter la matière première de taille réduite en direction de l'appareil compacteur (100) et dans lequel appareil (100) est agencé pour recevoir ladite matière première de taille réduite dans l'une des chambres tubulaires (10, 11, 12, 13) par l'intermédiaire de la première ouverture (2) du panneau avant (1), et dans lequel l'appareil (100) est en outre agencé pour recevoir l'élément de compresseur (35) dans la chambre tubulaire, adjacente à la chambre recevant les matières premières, par l'intermédiaire de la deuxième ouverture (36) du panneau avant (1), ledit élément de compresseur (35) est agencé pour effectuer un mouvement réciproque linéaire à l'intérieur de la chambre titulaire en direction de l'ouverture de panneau arrière (6) scellée au moyen d'un obturateur (37), et dans lequel les éléments de chauffage (22, 23, 24, 25) sont agencés pour fournir de l'énergie thermique au contenu des chambres tubulaires correspondantes (10, 11, 12, 13) pendant l'opération de compactage.

9. Ensemble (500) selon la revendication 8, dans lequel l'appareil (100) est agencé pour recevoir l'élément de compresseur (35) dans la chambre tubulaire, séparée de la chambre recevant les matières premières par un virage à 90 degrés.

10. Ensemble (500) selon la revendication 8, comprenant en outre un dispositif d'alimentation destiné au prédécoupage de la matière première brute et agencé en amont par rapport au broyeur (300) et/ou un deuxième moyen de transport permettant de transporter le produit compacté vers un plateau de collecte, agencé en aval par rapport à l'appareil compacteur (100).

11. Ensemble (500), selon la revendication 8, destiné au traitement et au compactage de polystyrène expansé (EPS) et de mousses de polystyrène expansé, en particulier, des boîtes d'emballage EPS gaspillées.

12. Procédé de traitement et de compactage de matières premières thermoplastiques au moyen de l'ensemble (500), telle que définie dans l'une quelconque des revendications 8 et 9, comprenant au moins les étapes suivantes consistant à :
a) réduire la taille physique de la matière première brute dans le broyeur (300) ;
b) transporter la matière première de réduite en direction de l'appareil compacteur (100) par le moyen de transport (200) ;
c) fournir la matière première de réduite dans l'une des chambres tubulaires (10, 11, 12, 13) par l'intermédiaire de l'ouverture d'alimentation en matières premières (2) jusqu'à la réception d'un signal indiquant que le remplissage est terminé ;
d) régler l'unité rotative (101) pour exécuter un mouvement de rotation jusqu'à ce que la chambre contenant la matière première soit alignée avec l'ouverture de réception de l'élément de compresseur (36) tandis qu'une des chambres tubulaires, adjacente à la chambre contenant le matière première, soit alignée avec l'ouverture d'alimentation en matières premières (2) ;
e) effectuer l'étape (c) par rapport à la chambre tubulaire aligner avec l'ouverture d'alimentation en matières premières (2) ;
f) de manière simultanée à l'étape (e) régler l'élément de compresseur (35) pour faire entrer la chambre contenant la matière première, alignée avec l'ouverture de réception de l'élément de compresseur (36), par l'intermédiaire de ladite ouverture (36) et pour exécuter un mouvement linéaire à l'intérieur de ladite chambre contenant la matière première dans une direction de l'ouverture de décharge (6), scellée par l'obturateur (37), jusqu'à réception d'un signal indiquant qu'un degré de compaction souhaité soit atteint ;
g) ramener l'élément de compresseur (35) à une position initiale ;
h) effectuer les étapes (d à g) jusqu'à réception d'un signal indiquant qu'un produit compacté formé après compression de matières premières dans l'une des chambres tubulaires (10, 11, 12, 13) a atteint une longueur prédéterminée ;
i) relâcher l'obturateur (37) et décharger le produit compacté par l'intermédiaire de l'ouverture (6), dans lequel l'énergie thermique est fournie au contenu des chambres tubulaires pendant l'opération de compactage au moyen des éléments de chauffage agencés de manière à entourer chaque chambre tubulaire (10, 11, 12, 13).

13. Procédé selon la revendication 12, dans lequel unité rotative (100) déverrouillé en position statique au moyen d'un élément de verrouillage (32) dans les périodes entre les rotations.
